# EUROPEAN PATENT SPECIFICATION

(11) **EP 4 224 797 B1**
(45) Date of publication and mention of the grant of the patent: **14.05.2025**
(21) Application number: 21884851.3
(22) Date of filing: 27.09.2021
(51) Int. Cl.: H04L 12/00

(54) **METHOD AND APPARATUS FOR PROCESSING PUSH MESSAGE**
VERFAHREN UND VORRICHTUNG ZUR VERARBEITUNG VON PUSH-NACHRICHTEN
PROCÉDÉ ET APPAREIL DE TRAITEMENT DE MESSAGE DE POUSSÉE

(30) Priority: 27.10.2020 CN 202011169876
(43) Date of publication of application: 09.08.2023
(73) Proprietor: Petal Cloud Technology Co., Ltd., Dongguan, Guangdong 523799 (CN)
(72) Inventor: FU, Zhicheng, Shenzhen, Guangdong 518129 (CN)
(74) Representative: Maiwald GmbH
(86) International application number: PCT/CN2021/121028
(87) International publication number: WO 2022/089121

(56) References cited:
- WO-A1-2019/125202
- CN-A- 103 037 312
- CN-A- 103 348 663
- CN-A- 104 639 562
- US-A1- 2019 104 190
- US-A1- 2020 112 557
- US-B2- 9 432 796

## Description

This application claims priority to Chinese Patent Application No. 202011169876.0, filed with the China National Intellectual Property Administration on October 27, 2020 and entitled "METHOD AND APPARATUS FOR PROCESSING PUSH MESSAGE".

### TECHNICAL FIELD

This application relates to the field of electronic technologies, and specifically, to a method and an apparatus for processing a push message.

### BACKGROUND

Push is a manner of transmitting information between an application (application, APP) installed on a terminal device and an app server. For example, a server of a news app periodically or aperiodically sends news that a user is interested in to the terminal device. This information transmission manner is push, and a message that carries the news is a push message.

In some scenarios, the push message includes privacy information of the user. For example, a push message of an instant messaging app may include friend verification information of a user of the instant messaging app, and a push message of a financial app may include bill information of a user of the financial app. Both the friend verification information and the bill information are privacy information. To prevent the privacy information from being disclosed due to account switching in the app, the terminal device needs to verify a received push message, to ensure that the push message is displayed to a correct user.

A method for verifying the push message is that the terminal device determines whether an account identifier in the push message is consistent with an identifier of a currently logged-in account of the app; and displays the push message if the account identifier in the push message is consistent with the identifier of the currently logged-in account of the app; or does not display the push message if the account identifier in the push message is not consistent with the identifier of the currently logged-in account of the app. However, in this verification manner, the terminal device needs to interact with the server by using a network, to determine the currently logged-in account of the app. If a fault occurs in the network or a process of the app is deleted by an operating system before a logout operation is performed, the verification on the push message fails. In this case, the terminal device may choose not to display the push message, and consequently the user cannot receive the push message in a timely manner. The US 9 432 796 B2 refers to a dynamic adjustment of a mobile device based on peer event data.

### SUMMARY

This application provides a method and an apparatus for processing a push message, a computer-readable storage medium, and a computer program product, to avoid disclosure of privacy information and improve real-time performance of a push message. The invention is set out in the appended set of claims.

According to a first aspect, a method for processing a push message is provided, and includes: generating a first profile identifier based on an account identifier of a currently logged-in account of an app; sending the first profile identifier and a token in a push system to a server of the app; receiving a push message from the server by using a push connection corresponding to the token, where the push message includes a second profile identifier; and determining a processing manner of the push message based on whether the second profile identifier is the same as the first profile identifier.

The method may be performed by a terminal device or a chip in a terminal device. After receiving the push message that includes the second profile identifier, the terminal device may display the push message if the second profile identifier is the same as the first profile identifier; or may not display the push message if the second profile identifier is different from the first profile identifier. The first profile identifier is locally stored information generated by the terminal device. Therefore, when verifying the second profile identifier, the terminal device neither needs to interact with the server by using a network, nor needs to consider whether a process of the app exists, and therefore can determine the processing manner of the push message in a timely manner, thereby avoiding disclosure of privacy information and improving real-time performance of the push message.

Optionally, the first profile identifier is a unique profile identifier locally stored by the app, and the determining a processing manner of the push message based on whether the second profile identifier is the same as the first profile identifier includes: when the second profile identifier is the same as the first profile identifier, displaying the push message; or when the second profile identifier is different from the first profile identifier, determining not to display the push message.

For example, when a user performs an operation on the app in an interface of the app to log in to a new account, it indicates that the user does not want to receive a push message corresponding to an old account in the app. In this case, regardless of whether the old account is a private account of the app or a public account of a plurality of apps, the terminal device may delete a profile identifier corresponding to the old account, and generate a profile identifier corresponding to the new account, to meet a user requirement. In this way, the terminal device always locally retains a profile identifier (for example, the first profile identifier). In this case, the terminal device may determine the processing manner of the push message based on whether the profile identifier in the push message is the same as the local profile identifier, and does not need to perform other processing, thereby simplifying complexity of verifying the push message.

Optionally, the determining a processing manner of the push message based on whether the second profile identifier is the same as the first profile identifier includes: when the second profile identifier is the same as the first profile identifier, and a state of the first profile identifier is a valid state, displaying the push message; or when the second profile identifier is the same as the first profile identifier, and a state of the first profile identifier is an invalid state, determining not to display the push message.

In some scenarios, a process of the app may be deleted by an operating system. In this case, a user does not express an intention of logging out of the account of the app, the user may just not perform an operation on the app for a long time, and the intention of the user may not be met if the terminal device directly deletes the first profile identifier. Therefore, the terminal device may not delete the first profile identifier, but set the state of the first profile identifier to the invalid state. If the second profile identifier in the push message is the same as the first profile identifier, and the first profile identifier is in the invalid state, for security, the terminal device may not display the push message. When the user starts the app again, the terminal device may set the state of the first profile identifier to the valid state, so as to receive a subsequent push message. In comparison with a solution in which the first profile identifier is directly deleted, in this embodiment, when the user starts the app again, a complex profile identifier generation process does not need to be performed, and a capability of receiving the push message by the app can be quickly restored, thereby improving real-time performance of obtaining the push message by the user.

Optionally, the account identifier is a terminal manufacturer account identifier; and when an account corresponding to the terminal manufacturer account identifier is in a logged-in state, the state of the first profile identifier is the valid state; or when an account corresponding to the terminal manufacturer account identifier is in a non-logged-in state, the state of the first profile identifier is the invalid state.

In some scenarios, the logged-in account of the app is not a private account of the app, but is a public account. The public account is, for example, a terminal manufacturer account. One terminal manufacturer account may have an association relationship with a plurality of profile identifiers. When the terminal manufacturer account is in the logged-in state, it indicates that the user is still using the terminal device. In this case, the terminal device may set states of all profile identifiers (including the first profile identifier) associated with the terminal manufacturer account to the valid state. When the terminal manufacturer account is in the non-logged-in state, it indicates that the user does not use the terminal device. In this case, the terminal device may set states of all profile identifiers (including the first profile identifier) associated with the terminal manufacturer account to the invalid state. In this way, when the user logs in to the terminal manufacturer account again, a complex profile identifier generation process does not need to be performed, and a capability of receiving the push message by the app can be quickly restored, thereby improving real-time performance of obtaining the push message by the user.

Optionally, when it is determined not to display the push message, the method further includes: deleting the push message.

If the app has a relatively high security requirement, the terminal device may delete a push message that is not displayed, to improve security of user data.

Optionally, the first profile identifier is information generated after the account identifier is processed by using a hash algorithm, and the push message does not include the account identifier.

In the hash algorithm, the account identifier can be anonymized to generate a profile identifier, and the profile identifier no longer uniquely identifies a user. The push message includes the second profile identifier but does not include the account identifier, to help protect user privacy.

Optionally, the push message is a notification bar message.

Display logic of the notification bar message does not need to be processed by the app. Even if the process of the app does not exist, the terminal device may display some push messages for which a profile identifier does not need to be verified. Therefore, using the notification bar message to push information to the user helps increase a push success probability.

According to a second aspect, another method for processing a push message is provided, and includes: receiving a first profile identifier, a token in a push system, and an account identifier of an app from a terminal device; and sending a push message to the terminal device based on the first profile identifier, the token, and the account identifier, where the push message includes a second profile identifier, the second profile identifier is the same as the first profile identifier, and the second profile identifier is to be used by the terminal device to determine a processing manner of the push message.

The method may be performed by an app server or a chip in an app server. After receiving the first profile identifier, the token in the push system, and the account identifier of the app, the app server records an association relationship among the three pieces of information. When information needs to be pushed to the app, the corresponding first profile identifier and the corresponding token may be determined based on the account identifier and the association relationship, and the first profile identifier is written into the push message. The first profile identifier in the push message may also be referred to as the second profile identifier, so that the terminal device verifies whether the second profile identifier is the same as the locally stored first profile identifier, to determine the processing manner of the push message. If the second profile identifier is the same as the first profile identifier, the terminal device may display the push message. If the second profile identifier is different from the first profile identifier, the terminal device may not display the push message. The first profile identifier is locally stored information generated by the terminal device, and when verifying the second profile identifier, the terminal device neither needs to interact with the server by using a network, nor needs to consider whether a process of the app exists. Therefore, in the foregoing solution, the terminal device can determine the processing manner of the push message in a timely manner, thereby avoiding disclosure of privacy information and improving real-time performance of the push message.

Optionally, the first profile identifier is information generated after the account identifier is processed by using a hash algorithm, and the push message does not include the account identifier.

In the hash algorithm, the account identifier can be anonymized to generate a profile identifier, and the profile identifier no longer uniquely identifies a user. The push message includes the second profile identifier but does not include the account identifier, to help protect user privacy.

Optionally, the push message is a notification bar message.

Display logic of the notification bar message does not need to be processed by the app. Even if the process of the app does not exist, the terminal device may display some push messages for which a profile identifier does not need to be verified. Therefore, using the notification bar message to push information to the user helps increase a push success probability.

According to a third aspect, an apparatus for processing a push message is provided, and includes a unit configured to perform any method in the first aspect.

In a possible case, the apparatus includes a processor and a memory. The memory is configured to store a computer program, and the processor is configured to: invoke the computer program from the memory, and run the computer program, so that the device performs any method in the first aspect.

According to a fourth aspect, another apparatus for processing a push message is provided, and includes a unit configured to perform any method in the second aspect.

In a possible case, the apparatus includes a processor and a memory. The memory is configured to store a computer program, and the processor is configured to: invoke the computer program from the memory, and run the computer program, so that the device performs any method in the second aspect.

According to a fifth aspect, a computer program product is provided. The computer program product includes computer program code, and when the computer program code is run by an apparatus for processing a push message, the apparatus is enabled to perform any method in the first aspect.

According to a sixth aspect, a computer program product is provided. The computer program product includes computer program code, and when the computer program code is run by an apparatus for processing a push message, the apparatus is enabled to perform any method in the second aspect.

According to a seventh aspect, a computer-readable medium is provided. The computer-readable medium stores program code, and the program code includes instructions used to perform any method in the first aspect.

According to an eighth aspect, a computer-readable medium is provided. The computer-readable medium stores program code, and the program code includes instructions used to perform any method in the second aspect.

### BRIEF DESCRIPTION OF DRAWINGS

FIG. 1 is a schematic diagram of a hardware system of a terminal device for processing a push message according to this application;
FIG. 2 is a schematic diagram of a software system of a terminal device for processing a push message according to this application;
FIG. 3 is a schematic diagram of a push system according to this application;
FIG. 4 is a schematic diagram of a method for processing a push message according to this application;
FIG. 5 shows a method for obtaining a token and a public account identifier according to this application;
FIG. 6 shows a method for obtaining a token and a private account identifier according to this application;
FIG. 7 is a schematic diagram of a method for displaying a push message according to this application;
FIG. 8 is a schematic diagram of a method for skipping displaying a push message according to this application;
FIG. 9 is a schematic diagram of a method for deleting a first profile identifier according to this application;
FIG. 10 is a schematic diagram of a method for setting a state of a first profile identifier to an invalid state according to this application;
FIG. 11 is a schematic diagram of a method for setting a state of a first profile identifier to a valid state according to this application;
FIG. 12 is a schematic diagram of an apparatus for processing a push message according to this application;
FIG. 13 is a schematic diagram of another apparatus for processing a push message according to this application; and
FIG. 14 is a schematic diagram of an electronic device for processing a push message according to this application.

### DESCRIPTION OF EMBODIMENTS

The following describes technical solutions of embodiments in this application with reference to accompanying drawings.

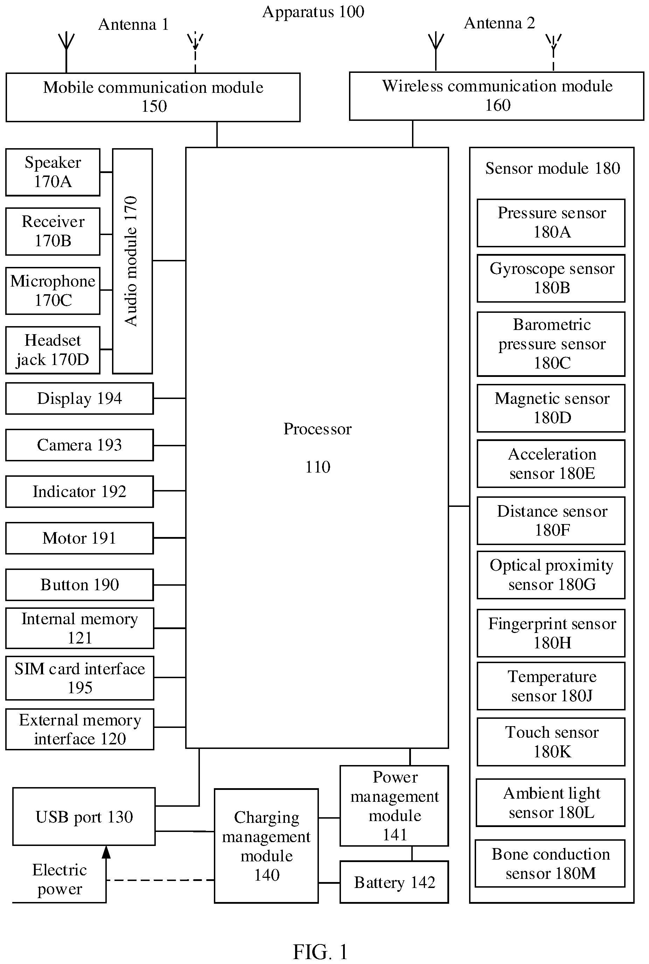

FIG. 1 shows a hardware structure of an apparatus applicable to this application. The apparatus is configured to obtain an audio signal in an environment in which a user is located.

As shown in FIG. 1, the apparatus 100 may be a mobile phone, a smart screen, a tablet computer, a wearable electronic device, a vehicle-mounted electronic device, an augmented reality (augmented reality, AR) device, a virtual reality (virtual reality, VR) device, a notebook computer, an ultra-mobile personal computer (ultra-mobile personal computer, UMPC), a netbook, a personal digital assistant (personal digital assistant, PDA), a projector, or the like. A specific type of the apparatus 100 is not limited in this embodiment of this application.

The apparatus 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It should be noted that the structure shown in FIG. 1 does not constitute a specific limitation on the apparatus 100. In some other embodiments of this application, the apparatus 100 may include more or fewer components than the components shown in FIG. 1, the apparatus 100 may include a combination of some of the components shown in FIG. 1, or the apparatus 100 may include subcomponents of some of the components shown in FIG. 1. The components shown in FIG. 1 may be implemented by hardware, software, or a combination of software and hardware.

The processor 110 may include one or more processing units. For example, the processor 110 may include at least one of the following processing units: an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and a neural-network processing unit (neural-network processing unit, NPU). Different processing units may be independent components, or may be integrated components.

The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. Therefore, repeated access is avoided, and a waiting time of the processor 110 is reduced, and therefore system efficiency is improved.

In some embodiments, the processor 110 may include one or more interfaces. For example, the processor 110 may include at least one of the following interfaces: an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM interface, and a USB port.

The I2C interface is a two-way synchronization serial bus, and includes one serial data line (serial data line, SDA) and one serial clock line (derail clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through an I2C interface, so that the processor 110 communicates with the touch sensor 180K through the I2C bus interface, to implement a touch function of the apparatus 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be configured to: perform audio communication, and sample, quantize, and encode an analog signal. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be configured to perform audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to peripheral components such as the display 194 and the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the apparatus 100. The processor 110 communicates with the display 194 through the DSI interface, to implement a display function of the apparatus 100.

The GPIO interface may be configured by software. The GPIO interface may be configured as a control signal interface, or may be configured as a data signal interface. In some embodiments, the GPIO interface may be configured to connect the processor 110 to the camera 193, the display 194, the wireless communication module 160, the audio module 170, and the sensor module 180. The GPIO interface may alternatively be configured as an I2C interface, an I2S interface, a UART interface, or an MIPI interface.

The USB port 130 is an interface that conforms to a USB standard specification, for example, may be a mini (Mini) USB port, a micro (Micro) USB port, or a USB Type C (USB Type C) port. The USB port 130 may be configured to be connected to the charger to charge the apparatus 100, may be configured to transmit data between the apparatus 100 and a peripheral device, or may be configured to be connected to the headset to play audio through the headset. The USB port 130 may be further configured to be connected to another apparatus 100, for example, an AR device.

The connection relationship between the modules shown in FIG. 1 is merely an example for description, and does not constitute a limitation on the connection relationship between the modules in the apparatus 100. Optionally, the modules in the apparatus 100 may alternatively use a combination of a plurality of connection manners in the foregoing embodiment.

The charging management module 140 is configured to receive electric power from the charger. The charger may be a wireless charger or a wired charger. In some embodiments of wired charging, the charging management module 140 may receive a current of the wired charger through the USB port 130. In some embodiments of wireless charging, the charging management module 140 may receive an electromagnetic wave (a current path is shown by a dashed line) through a wireless charging coil of the apparatus 100. When charging the battery 142, the charging management module 140 may further supply power to the apparatus 100 through the power management module 141.

The power management module 141 is configured to be connected to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery state of health (for example, electric leakage and impedance). Optionally, the power management module 141 may be disposed in the processor 110, or the power management module 141 and the charging management module 140 may be disposed in a same component.

A wireless communication function of the apparatus 100 may be implemented by using components such as the antenna 1, the antenna 2, the mobile communication module 150, the wireless communication module 160, the modem processor, and the baseband processor.

The antenna 1 and the antenna 2 are configured to transmit and receive an electromagnetic wave signal. Each antenna in the apparatus 100 may be configured to cover one or more communication bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution applied to the apparatus 100, for example, at least one of the following solutions: a 2nd generation (2th generation, 2G) mobile communication solution, a 3rd generation (3th generation, 3G) mobile communication solution, a 4th generation (4th generation, 5G) mobile communication solution, and a 5th generation (5th generation, 5G) mobile communication solution. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and then transmit the electromagnetic wave to the modem processor for demodulation. The mobile communication module 150 may further amplify a signal modulated by the modem processor, and the amplified signal is converted into an electromagnetic wave through the antenna 1 for radiation. In some embodiments, at least some functional modules in the mobile communication module 150 may be disposed in the processor 110. In some embodiments, at least some functional modules in the mobile communication module 150 may be disposed in a same component as at least some modules in the processor 110.

The modem processor may include a modulator and a demodulator. The modulator is configured to modulate a to-be-sent low-frequency baseband signal into a medium or high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (for example, the speaker 170A or the receiver 170B), or displays an image or a video through the display 194. In some embodiments, the modem processor may be an independent component. In some other embodiments, the modem processor may be independent of the processor 110, and is disposed in a same component as the mobile communication module 150 or another functional module.

Similar to the mobile communication module 150, the wireless communication module 160 may also provide a wireless communication solution applied to the apparatus 100, for example, at least one of the following solutions: a wireless local area network (wireless local area networks, WLAN), Bluetooth (Bluetooth, BT), a global navigation satellite system (global navigation satellite system, GNSS), frequency modulation (frequency modulation, FM), near field communication (near field communication, NFC), and infrared (infrared, IR). The wireless communication module 160 may be one or more components into which at least one communication processing module is integrated. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave through the antenna 2 for radiation.

In some embodiments, the antenna 1 and the mobile communication module 150 in the apparatus 100 are coupled, and the antenna 2 and the wireless communication module 160 in the apparatus 100 are coupled.

The apparatus 100 may implement a display function by using the GPU, the display 194, and the application processor. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image or a video. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini light-emitting diode (mini light-emitting diode, Mini LED), a micro light-emitting diode (micro light-emitting diode, Micro LED), a micro OLED (Micro OLED), or a quantum dot light emitting diode (quantum dot light emitting diodes, QLED). In some embodiments, the apparatus 100 may include one or N displays 194, where N is a positive integer greater than 1.

The apparatus 100 may implement a photographing function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may perform algorithm optimization on noise, brightness, and a color of an image, and the ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as red green blue (red green blue, RGB) or YUV In some embodiments, the apparatus 100 may include one or N cameras 193, where N is a positive integer greater than 1.

The digital signal processor is configured to process a digital signal, and may process another digital signal in addition to the digital image signal. For example, when the apparatus 100 selects a frequency, the digital signal processor is configured to perform Fourier transform on frequency energy.

The video codec is configured to compress or decompress a digital video. The apparatus 100 may support one or more video codecs. In this way, the apparatus 100 may play or record videos in a plurality of coding formats, for example, moving picture experts group (moving picture experts group, MPEG)-1, MPEG-2, MPEG-3, and MPEG-4.

The NPU is a processor that uses a structure of a biological neural network as a reference. For example, the NPU quickly processes input information by using a transmission mode between human brain neurons, and may further continuously perform self-learning. Functions such as intelligent cognition of the apparatus 100 may be implemented by using the NPU, for example, image recognition, facial recognition, speech recognition, and text understanding.

The external memory interface 120 may be configured to be connected to an external storage card, for example, a secure digital (secure digital, SD) card, to extend a storage capability of the apparatus 100. The external storage card communicates with the processor 110 through the external memory interface 120, to implement a data storage function. For example, files such as music and videos are stored in the external storage card.

The internal memory 121 may be configured to store computer-executable program code. The executable program code includes instructions. The internal memory 121 may include a program storage area and a data storage area. The program storage area may store an operating system and an application required by at least one function (for example, a sound playing function and an image playing function). The data storage area may store data (for example, audio data and an address book) created in a process of using the apparatus 100. In addition, the internal memory 121 may include a high-speed random access memory, and may further include a nonvolatile memory, for example, at least one magnetic disk storage device, a flash memory, and a universal flash storage (universal flash storage, UFS). The processor 110 runs the instructions stored in the internal memory 121 and/or the instructions stored in the memory disposed in the processor, to perform various processing methods of the apparatus 100.

The apparatus 100 may implement an audio function, for example, music playing and recording, by using the audio module 170, the speaker 170A, the receiver 170B, the microphone 170C, the headset jack 170D, the application processor, and the like.

The audio module 170 is configured to convert digital audio information into an analog audio signal for output, and may also be configured to convert an analog audio input into a digital audio signal. The audio module 170 may be further configured to encode and decode an audio signal. In some embodiments, the audio module 170 or some functional modules in the audio module 170 may be disposed in the processor 110.

The speaker 170A, also referred as a loudspeaker, is configured to convert an audio electrical signal into a sound signal. The apparatus 100 may listen to music or answer a hands-free call by using the speaker 170A.

The receiver 170B, also referred to as an earpiece, is configured to convert an audio electrical signal into a sound signal. When using the apparatus 100 to answer a call or receive voice information, a user may receive a voice by placing the receiver 170B close to an ear.

The microphone 170C, also referred to as a mike or a mic, is configured to convert a sound signal into an electrical signal. When making a call or sending voice information, the user may make a sound by approaching the microphone 170C, to input a sound signal to the microphone 170C. At least one microphone 170C may be disposed in the apparatus 100. In some other embodiments, two microphones 170C may be disposed in the apparatus 100, to implement a noise reduction function. In some other embodiments, three, four, or more microphones 170C may alternatively be disposed in the apparatus 100, to implement functions such as sound source identification and directional recording.

The headset jack 170D is configured to be connected to a wired headset. The headset jack 170D may be a USB port 130, or may be a 3.5 mm open mobile terminal 100 platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed on the display 194. There are many types of pressure sensors 180A, for example, there may be a resistive pressure sensor, an inductive pressure sensor, or a capacitive pressure sensor. The capacitive pressure sensor may include at least two parallel plates made of conductive materials. When force is applied to the pressure sensor 180A, capacitance between electrodes changes, and the apparatus 100 determines pressure intensity based on the capacitance change. When a touch operation is performed on the display 194, the apparatus 100 detects the touch operation by using the pressure sensor 180A. The apparatus 100 may further calculate a touch position based on a detection signal of the pressure sensor 180A. In some embodiments, touch operations that are performed at a same touch position but have different touch operation intensity may correspond to different operation instructions. For example, when a touch operation whose touch operation intensity is less than a first pressure threshold is performed on an icon of a messaging application, an instruction for viewing a short message service message is executed; or when a touch operation whose touch operation intensity is greater than or equal to a first pressure threshold is performed on an icon of a messaging application, an instruction for creating a new short message service message is executed.

The gyroscope sensor 180B may be configured to determine a motion posture of the apparatus 100. In some embodiments, angular velocities of the apparatus 100 around three axes (namely, an x axis, a y axis, and a z axis) may be determined by using the gyroscope sensor 180B. The gyroscope sensor 180B may be configured to implement image stabilization during photographing. For example, when the shutter is pressed, the gyroscope sensor 180B detects an angle at which the apparatus 100 jitters, calculates, based on the angle, a distance for which a lens module needs to compensate, and allows the lens to cancel the jitter of the apparatus 100 through reverse movement, to implement image stabilization. The gyroscope sensor 180B may be further used for scenarios such as navigation and a motion sensing game.

The barometric pressure sensor 180C is configured to measure barometric pressure. In some embodiments, the apparatus 100 calculates an altitude by using a value of the barometric pressure measured by the barometric pressure sensor 180C, to assist in positioning and navigation.

The magnetic sensor 180D includes a Hall sensor. The apparatus 100 may detect opening and closing of a flip holster by using the magnetic sensor 180D. In some embodiments, when the apparatus 100 is a flip phone, the apparatus 100 may detect opening and closing of a flip cover based on the magnetic sensor 180D. The apparatus 100 may set a feature such as automatic unlocking upon opening of the flip cover based on the detected open/closed state of the holster or the flip cover.

The acceleration sensor 180E may detect magnitudes of acceleration of the apparatus 100 in various directions (usually on the x axis, the y axis, and the z axis), and may detect a magnitude and a direction of gravity when the apparatus 100 is still. The acceleration sensor 180E may be further configured to recognize a posture of the apparatus 100. A gravity parameter generated based on the posture is used as an input parameter of an application such as switching between a landscape mode and a portrait mode and a pedometer.

The distance sensor 180F is configured to measure a distance. The apparatus 100 may measure a distance by using infrared or laser. In some embodiments, for example, in a photographing scenario, the apparatus 100 may measure a distance by using the distance sensor 180F, to implement quick focusing.

The optical proximity sensor 180G may include, for example, a light-emitting diode (light-emitting diode, LED) and an optical detector, for example, a photodiode. The LED may be an infrared LED. The apparatus 100 emits infrared light by using the LED. The apparatus 100 detects infrared reflected light from a nearby object by using the photodiode. When reflected light is detected, the apparatus 100 may determine that there is an object nearby. When no reflected light is detected, the apparatus 100 may determine that there is no object nearby. The apparatus 100 may detect, by using the optical proximity sensor 180G, whether the user holds the apparatus 100 close to an ear for making a call, to automatically turn off a screen for power saving. The optical proximity sensor 180G may also be used for automatic unlocking and automatic screen locking in a holster mode or a pocket mode.

The ambient light sensor 180L is configured to sense ambient light brightness. The apparatus 100 may adaptively adjust brightness of the display 194 based on the sensed ambient light brightness. The ambient light sensor 180L may be further configured to automatically adjust white balance during photographing. The ambient light sensor 180L may further cooperate with the optical proximity sensor 180G to detect whether the apparatus 100 is in a pocket, to avoid an accidental touch.

The fingerprint sensor 180H is configured to collect a fingerprint. The apparatus 100 may use a feature of the collected fingerprint to implement functions such as unlocking, application lock access, photographing, and incoming call answering.

The temperature sensor 180J is configured to detect a temperature. In some embodiments, the apparatus 100 executes a temperature processing policy by using the temperature detected by the temperature sensor 180J. For example, when the temperature reported by the temperature sensor 180J exceeds a threshold, the apparatus 100 lowers performance of a processor located near the temperature sensor 180J, to reduce power consumption and implement thermal protection. In some other embodiments, when the temperature is less than another threshold, the apparatus 100 heats the battery 142 to prevent the apparatus 100 from being shut down abnormally due to a low temperature. In some other embodiments, when the temperature is less than still another threshold, the apparatus 100 boosts an output voltage of the battery 142 to avoid abnormal shutdown caused due to a low temperature.

The touch sensor 180K is also referred to as a touch component. The touch sensor 180K may be disposed on the display 194, and the touch sensor 180K and the display 194 form a touchscreen. The touchscreen is also referred to as a touchscreen. The touch sensor 180K is configured to detect a touch operation performed on or near the touch sensor 180K. The touch sensor 180K may transmit the detected touch operation to the application processor to determine a touch event type. A visual output related to the touch operation may be provided through the display 194. In some other embodiments, the touch sensor 180K may alternatively be disposed on a surface of the apparatus 100, and is located at a position different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may be in contact with a human pulse, to receive a blood pressure beating signal. In some embodiments, the bone conduction sensor 180M may alternatively be disposed in a headset to be combined into a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button and a volume button. The button 190 may be a mechanical button or a touch button. The apparatus 100 may receive a button input signal, and implement a function related to the button input signal.

The motor 191 may generate vibration. The motor 191 may be used for an incoming call prompt, and may be further used for touch feedback. The motor 191 may generate different vibration feedback effects for touch operations performed on different applications. For touch operations performed on different areas of the display 194, the motor 191 may also generate different vibration feedback effects. Different application scenarios (for example, a time reminder, information receiving, an alarm clock, and a game) may correspond to different vibration feedback effects. A touch vibration feedback effect may be further customized.

The indicator 192 may be an indicator light, and may be configured to indicate a charging status and a power change, or may be configured to indicate a message, a missed call, and a notification.

The SIM card interface 195 is configured to be connected to a SIM card. The SIM card may be inserted into the SIM card interface 195 to come into contact with the apparatus 100, or may be removed from the SIM card interface 195 to be separated from the apparatus 100. The apparatus 100 may support one or N SIM card interfaces, where N is a positive integer greater than 1. A plurality of cards may be simultaneously inserted into a same SIM card interface 195, and the plurality of cards may be of a same type or different types. The SIM card interface 195 is also compatible with an external storage card. The apparatus 100 interacts with a network by using the SIM card, to implement functions such as a call and data communication. In some embodiments, the apparatus 100 uses an embedded SIM (embedded-SIM, eSIM) card, and the eSIM card may be embedded into the apparatus 100 and cannot be separated from the apparatus 100.

A hardware system of the apparatus 100 is described above in detail. A software system of the apparatus 100 is described below. The software system may use a layered architecture, an event-driven architecture, a microkernel architecture, a micro service architecture, or a cloud architecture. In this embodiment of this application, the software system of the apparatus 100 is described by using the layered architecture as an example.

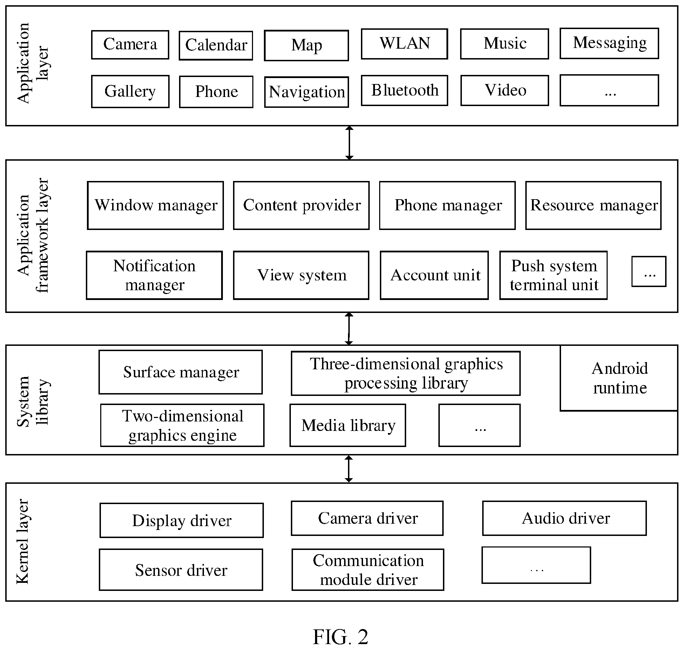

As shown in FIG. 2, the software system using the layered architecture is divided into several layers, and each layer has a clear role and task. The layers communicate with each other through a software interface. In some embodiments, the software system may be divided into four layers: an application layer, an application framework layer, an Android runtime (Android Runtime) and system library, and a kernel layer from top to bottom.

The application layer may include applications such as Camera, Gallery, Calendar, Phone, Map, Navigation, WLAN, Bluetooth, Music, Video, and Messaging.

The application may access a push system, obtain a token (token) of the push system, and set a profile identifier (profileID).

The application framework layer provides an application programming interface (application programming interface, API) and a programming framework for an application at the application layer. The application framework layer may include some predefined functions.

For example, the application framework layer includes a window manager, a content provider, a view system, a phone manager, a resource manager, a notification manager, a push system terminal unit, and an account unit.

The window manager is configured to manage a window program. The window manager may obtain a size of a display, and determine whether there is a status bar, a screen is locked, and a screenshot is taken.

The content provider is configured to: store and obtain data, and enable the data to be accessed by an application. The data may include a video, an image, audio, calls that are made and answered, a browsing history and bookmarks, and an address book.

The view system includes visual controls such as a control for displaying text and a control for displaying a picture. The view system may be configured to construct an application. A display interface may include one or more views. For example, a display interface including a short message service message notification icon may include a view for displaying text and a view for displaying a picture.

The phone manager is configured to provide a communication function, for example, management of a call status (connected or disconnected).

The resource manager provides various resources such as a localized character string, an icon, a picture, a layout file, and a video file for an application.

The notification manager enables an application to display notification information in a status bar, and may be configured to convey a notification message that may automatically disappear after a short pause without requiring user interaction. For example, the notification manager is used for download completion notification and message notification. The notification manager may further manage a notification that appears in the status bar at the top of the system in a form of a graph or scroll bar text, for example, a notification of an application running in background. The notification manager may further manage a notification that appears on the screen in a form of a dialog window. For example, text information is displayed in the status bar, an alert tone is made, the electronic device vibrates, and the indicator light flashes.

The push system terminal unit is configured to: receive a push message, and determine whether to display the push message. If determining to display the push message, the push system terminal unit may further send the push message to a corresponding app.

The account unit is configured to manage a login status of a terminal manufacturer account. For example, an operation of logging in to or logging out of a Huawei account by the user may be implemented by the account unit.

The Android runtime includes a kernel library and a virtual machine. The Android runtime is responsible for scheduling and management of the Android system.

The kernel library includes two parts: a function that needs to be invoked in a Java language and a kernel library of Android.

The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Libraries), a three-dimensional graphics processing library (for example, OpenGL ES), and a 2D graphics engine (for example, SGL).

The surface manager is configured to: manage a display subsystem and provide fusion of a 2D layer and a 3D layer for a plurality of applications.

The media library supports playback and recording of a plurality of audio formats, playback of a plurality of video formats, and static image files. The media library may support a plurality of audio and video coding formats, for example, MPEG-4, H.264, MP3, AAC, AMR, JPG, and PNG.

The three-dimensional graphics processing library may be configured to implement three-dimensional graphics drawing, image rendering, synthesis, and layer processing.

The 2D graphics engine is a drawing engine for 2D drawing.

The kernel layer is a layer between hardware and software. The kernel layer may include a display driver, a camera driver, an audio driver, a sensor driver, and a communication module driver.

With reference to an account login scenario, working procedures of the software system and the hardware system of the apparatus 100 are described below by using an example.

When the user performs a touch operation on the touch sensor 180K, a corresponding hardware interrupt is sent to the kernel layer, and the kernel layer processes the touch operation into an original input event. The original input event includes, for example, information such as touch coordinates and a time stamp of the touch operation. The original input event is stored at the kernel layer. The application framework layer obtains the original input event from the kernel layer, and identifies a control corresponding to the original input event. If the touch operation is a tap operation, and a control corresponding to the tap operation is a login control of an app, the login control invokes an interface of the application framework layer to start the app, then invokes the kernel layer to start a communication module driver, and interacts with an app server through the mobile communication module 150 or the wireless communication module 160, to complete account login.

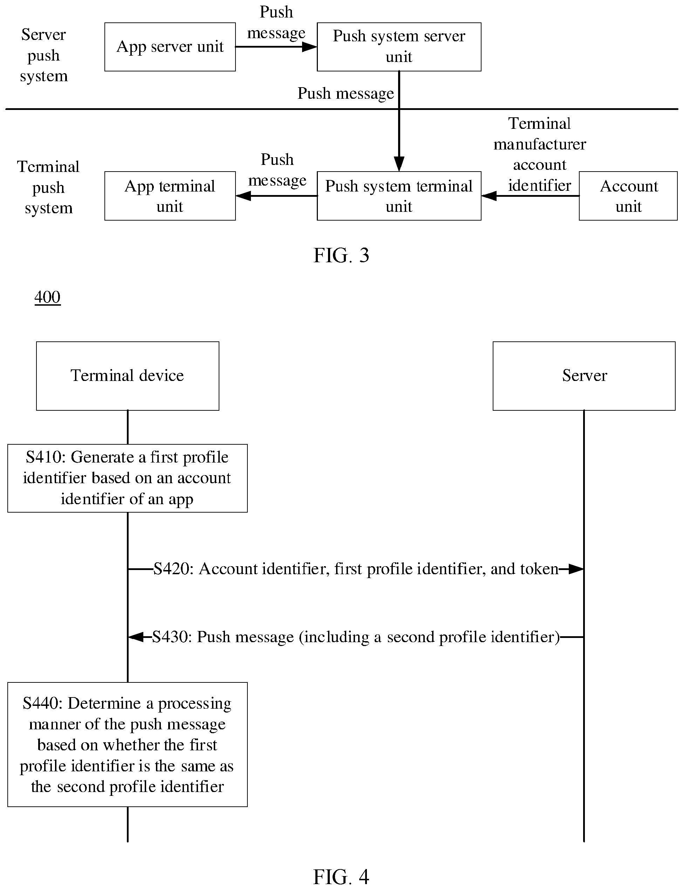

After account login is completed, the app may receive a push message from the server. FIG. 3 is a schematic diagram of a push system according to this application.

The push system includes a terminal push system and a server push system. The terminal push system includes an app terminal unit, a push system terminal unit, and an account unit. The server push system includes an app server unit and a push system server unit. The app terminal unit is an app installed on a terminal device, for example, each app shown at the application layer in FIG. 2. In addition, when the app terminal unit needs to log in to a public account (for example, a terminal manufacturer account), the app terminal unit may obtain a public account identifier from the account unit. When the app terminal unit needs to log in to a private account (an account that cannot be shared by different apps), the app terminal unit does not need to interact with the account unit.

The app server unit is an initiator of a push message, and when sending the push message, the app server unit may specify that for the push message, a profile identifier needs to be verified or a profile identifier does not need to be verified. The app server unit further provides a function of managing a token in the push system. The token is used to determine a push connection that carries the push message.

The profile identifier is information that is generated by the terminal device and that is used to identify a user of the app. For example, the terminal device performs hash calculation on an account identifier to obtain a hash value, and the hash value is the profile identifier. A specific form of the profile identifier is not limited in this application.

The token is information used to identify the terminal device. Generally, the token has been set before the terminal device is delivered, and remains unchanged in a subsequent process of using the terminal device. When being started, the app terminal unit may invoke a getToken interface of the push system terminal unit to obtain the token from the push system server unit. This process is a process of registering with the push system. Subsequently, the app terminal unit may send the token to the app server unit, so that the app server unit searches for a push connection corresponding to the terminal device.

After receiving the token, the app server unit decrypts the token to obtain a unique identifier in the token, and then may send a push message based on the push connection corresponding to the unique identifier. Each terminal device creates a push connection, and each terminal device identifies the push connection of the terminal device by using a token of the terminal device, so that it can be ensured that the app server unit sends a push message by using a correct push connection.

The push system server unit is responsible for maintaining a push connection to the push system terminal unit and receiving an instruction from the app server unit. The push system server unit may push, by using a push connection, a message to the terminal device and the app indicated by the instruction.

The push connection is, for example, a transmission control protocol (transmission control protocol, TCP) connection. The push system terminal unit and the push system server unit may maintain a TCP connection by using a heartbeat message mechanism. When the app server unit needs to send a push message to the app terminal unit, the app server unit may send the push message by using the TCP connection.

A method for processing a push message provided in this application is described below with reference to FIG. 4. As shown in FIG. 4, the method 400 includes the following content.

S410: A terminal device generates a first profile identifier based on an account identifier of a currently logged-in account of an app.

The account identifier may be a character string used to identify a user identity of the app, for example, a Huawei account identifier MDFAMTAxMzIwNjdAMDU1YzQyMDYyYzBlNDFhNWMyMjk1ODc2YWM1OThkYTVAYjVlZWU2NmI5Nz AwMzE5MWI12GQ0M1Q4YTA2MDEzNjM2MTg2MmE4Mjg3MDliaZDU4MzBhMjQ3OTY. The first profile identifier may be another character string 3DBrAN5fDa0EbRG9xSzMckOLMKuE+HxURiPnjbhcBgQ= obtained after the Huawei account identifier is processed by using a hash algorithm (SHA256), and the first profile identifier may also be used to identify the user identity of the app. Neither of specific forms of the account identifier and the first profile identifier is limited in this application.

The app may customize an occasion of generating the first profile identifier. The app may generate the first profile identifier when the account is logged in for the first time, may generate the first profile identifier each time the app is started, or may generate the first profile identifier in another scenario. For example, after obtaining a token in a push system, the app finds that the currently obtained token is different from a previously obtained token, and in this case, the app may invoke a binding interface to generate a new profile identifier (namely, the first profile identifier).

Subsequently, the terminal device may perform the following step.

S420: The terminal device sends the account identifier of the app, the first profile identifier, and the token in the push system to a server.

The app may be any one of the apps shown at the application layer in FIG. 2. A specific type of the app is not limited in this application. The account identifier may be an identifier of a private account of the app, or may be an identifier of a public account shared by a plurality of apps. The public account is, for example, an account of a manufacturer of the terminal device. A specific type of the account identifier is not limited in this application. After obtaining the account identifier, the first profile identifier, and the token in the push system, the server can determine, based on the account identifier, a user to which a push message is to be sent, and can determine, based on the token, a push connection for transmitting the push message. In addition, the server may further write the first profile identifier into the push message, so that after receiving the push message, the app verifies a profile identifier in the push message, and determines, based on the profile identifier in the push message, whether to display the push message. A method for verifying the profile identifier in the push message by the app is described below in detail.

Before performing S410 and S420, the terminal device needs to obtain the token and the account identifier. Each time the app is started, the app may invoke a token obtaining interface to obtain the token, and when finding that the currently obtained token is different from a previously obtained token, invoke an account identifier obtaining interface to obtain the account identifier. Specific processes of performing S410 and S420 by the terminal device are separately described below by using an example in which the account identifier is a private account identifier or a public account identifier.

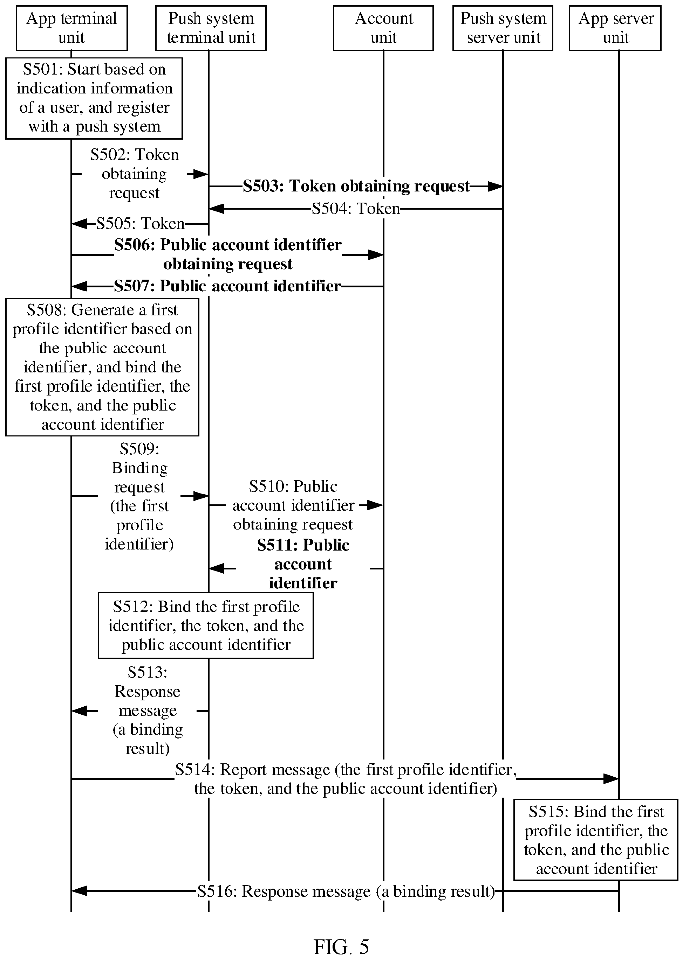

FIG. 5 shows a method for obtaining a token and a public account identifier according to this application.

S501: An app terminal unit starts based on indication information of a user, and registers with a push system. For example, the user taps an icon of a Huawei Wallet app on a terminal device, to trigger the terminal device to generate indication information for starting the Huawei Wallet app, and then the Huawei Wallet app registers with the push system, that is, performs a process of invoking a getToken interface to apply for a token.

S502: The app terminal unit sends a token obtaining request to a push system terminal unit, to request to obtain a token in the push system, where the token is to be used by an app server unit to determine, from a plurality of push connections, a push connection for the terminal device in S501 to receive a push message. For example, in a Huawei push system, the token may be a 130-bit character string, as shown in the following: AEbDAJtCDNEvEPujq9_ZvEW1ylUmpsfOUQEY6raR1zEAnngfPn-88NJ_y1vGAyCHy27arQAGgNb313CofS1-Muy2pSEhk4mTYJQKk6_DgxL5Yz-pQ125Hu2AugyvEShzKQ. The push system terminal unit is, for example, a push agent (PushAgent).

S503: The push system terminal unit sends a token obtaining request to a push system server unit, to request to obtain the token in the push system. The push system server unit is, for example, a push server (PushServer).

S504: The push system server unit sends the token to the push system terminal unit.

S505: The push system terminal unit forwards the token to the app terminal unit.

S506: The app terminal unit sends a public account identifier obtaining request to an account unit, to request to obtain a public account identifier. For example, after the Huawei Wallet app is started, if the user logs in to a Huawei account in an interface of the Huawei Wallet app, the Huawei Wallet app is triggered to send a request message to the Huawei account, to request to obtain a Huawei account identifier. The Huawei account identifier is an example of the public account identifier.

S507: The account unit sends the public account identifier to the app terminal unit.

S508: The app terminal unit generates a first profile identifier based on the public account identifier, and binds the public account identifier, the first profile identifier, and the token, that is, records an association relationship among the public account identifier, the first profile identifier, and the token.

When any one of the public account identifier, the first profile identifier, and the token changes, the app terminal unit may send an update message to the push system server unit by using the push system terminal unit, so that the push system server unit updates the association relationship in a timely manner, to prevent push information from being sent to an incorrect user.

S509: The app terminal unit sends a binding request to the push system terminal unit, to request the push system terminal unit to perform binding processing on the first profile identifier, where the binding request includes the first profile identifier.

Based on preset binding request processing logic, after receiving the binding request, the push system terminal unit needs to obtain the public account identifier corresponding to the first profile identifier, and bind the public account identifier, the first profile identifier, and the token, to update the association relationship among the three pieces of information when any piece of information changes, so as to prevent push information from being sent to an incorrect user.

S510: The push system terminal unit sends a public account identifier obtaining request to the account unit, to request to obtain the public account identifier.

S511: The account unit sends the public account identifier to the push system terminal unit.

S512: The push system terminal unit binds the public account identifier, the first profile identifier, and the token obtained in S504. The public account identifier may correspond to a plurality of profile identifiers (for example, a plurality of apps may generate respective profile identifiers based on a same Huawei account identifier). When the public account identifier is invalid, it indicates that a user corresponding to the public account identifier temporarily does not use the terminal device. The push system may set the first profile identifier to an invalid state based on a binding relationship between the first profile identifier and the public account identifier. After receiving a push message including the first profile identifier, the push system terminal unit may not display the push message, to prevent privacy information in the push message from being disclosed.

S513: The push system terminal unit sends a response message in response to the binding request to the app terminal unit, where the response message includes a binding result, and the binding result indicates that the binding processing on the first profile identifier is completed.

S514: The app terminal unit sends a report message to the app server unit, where the report message carries the first profile identifier, the token, and the public account identifier, so that the app server unit records the association relationship among the first profile identifier, the token, and the public account identifier. For example, the Huawei Wallet app sends a report message to a Huawei Wallet server, to request the Huawei Wallet server to bind the first profile identifier, the token, and the Huawei account identifier.

S515: The app server unit binds the first profile identifier, the token, and the public account identifier.

S516: The app server unit sends a response message in response to the report message to the app terminal unit, where the response message includes a binding result indicating that the first profile identifier, the token, and the public account identifier are bound.

When the account identifier is a private account identifier, the app terminal unit does not need to obtain a terminal manufacturer account identifier, and therefore does not need to interact with the account unit. In addition, in this case, the private account identifier is not associated with a terminal manufacturer account, and the push system terminal unit does not need to obtain the terminal manufacturer account identifier, in other words, the push system terminal unit does not need to interact with the account unit.

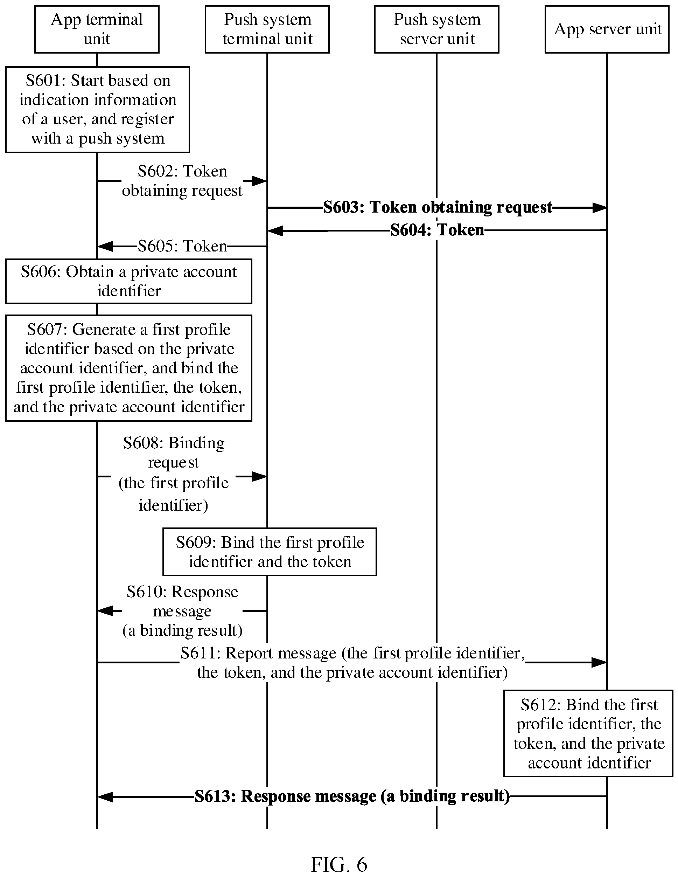

FIG. 6 shows a method for obtaining a token and a private account identifier according to this application.

S601: An app terminal unit starts based on indication information of a user, and registers with a push system. For example, the user taps an icon of a Huawei Wallet app on a terminal device, to trigger the terminal device to generate indication information for starting the Huawei Wallet app, and then the Huawei Wallet app registers with the push system, that is, performs a process of invoking a getToken interface to apply for a token.

S602: The app terminal unit sends a token obtaining request to a push system terminal unit, to request to obtain a token in the push system, where the token is to be used by an app server unit to determine, from a plurality of push connections, a push connection for the terminal device in S601 to receive a push message. For example, in a Huawei push system, the token may be a 130-bit character string, as shown in the following: AEbDAJtCDNEvEPujq9_ZvEW1ylUmpsfOUQEY6raR1zEAnngfPn-88NJ_y1vGAyCHy27arQAGgNb313CofS1-Muy2pSEhk4mTYJQKk6_DgxL5Yz-pQ125Hu2AugyvEShzKQ. The push system terminal unit is, for example, a push agent (PushAgent).

S603: The push system terminal unit sends a token obtaining request to a push system server unit, to request to obtain the token in the push system. The push system server unit is, for example, a push server (PushServer).

S604: The push system server unit sends the token to the push system terminal unit.

S605: The push system terminal unit forwards the token to the app terminal unit.

S606: The app terminal unit logs in to a private account of the app terminal unit, and obtains a private account identifier. The private account identifier is, for example, an account identifier of the app terminal unit, and the app terminal unit does not share the private account identifier with another app terminal unit.

S607: The app terminal unit generates a first profile identifier based on the private account identifier, and binds the private account identifier, the first profile identifier, and the token, that is, records an association relationship among the private account identifier, the first profile identifier, and the token.

When any one of the private account identifier, the first profile identifier, and the token changes, the app terminal unit may send an update message to the push system server unit by using the push system terminal unit, so that the push system server unit updates the association relationship in a timely manner, to prevent push information from being sent to an incorrect user.

S608: The app terminal unit sends a binding request to the push system terminal unit, to request the push system terminal unit to perform binding processing on the first profile identifier, where the binding request includes the first profile identifier.

Based on preset binding request processing logic, after receiving the binding request, the push system terminal unit needs to bind the first profile identifier and the token, to update an association relationship between the two pieces of information when any piece of information changes, so as to prevent push information from being sent to an incorrect user.

S609: The push system terminal unit binds the first profile identifier and the token obtained in S604.

S610: The push system terminal unit sends a response message in response to the binding request to the app terminal unit, where the response message includes a binding result, and the binding result indicates that the binding processing on the first profile identifier is completed.

S611: The app terminal unit sends a report message to the app server unit, where the report message carries the first profile identifier, the token, and the private account identifier, so that the app server unit records the association relationship among the first profile identifier, the token, and the private account identifier. For example, the Huawei Wallet app sends a report message to a Huawei Wallet server, to request the Huawei Wallet server to bind the first profile identifier, the token, and an account identifier of the Huawei Wallet app.

S612: The app server unit binds the first profile identifier, the token, and the private account identifier.

S613: The app server unit sends a response message in response to the report message to the app terminal unit, where the response message includes a binding result indicating that the first profile identifier, the token, and the private account identifier are bound.

Based on the solution shown in FIG. 5 or FIG. 6, the server determines the association relationship among the account identifier, the first profile identifier, and the token. When the server needs to send a push message to an app on the terminal device, the server may determine, based on the account identifier, a user corresponding to an app to which the push message is to be sent, and determine, based on the token, a push connection for transmitting the push message.

The server may write the first profile identifier into the push message. A profile identifier in the push message is a profile identifier that is not verified by the terminal device, and the terminal device does not determine that the profile identifier in the push message is the first profile identifier. Therefore, the profile identifier in the push message may be referred to as a second profile identifier.

Optionally, the push message does not include the account identifier. When the push message is a notification bar message, the push message may include a title and a body of the notification message, and other content may be customized by the app. When the push message is a transparent message, all content in the push message may be customized by the app. The second profile identifier may be information generated after the account identifier is anonymized, for example, a character string obtained after hash processing is performed on the account identifier.

The push message includes the second profile identifier but does not include the account identifier, to help protect user privacy.

The server sends the push message including the second profile identifier to the terminal device by using the push connection, and the terminal device may perform the following steps.

S430: The terminal device receives a push message from the server by using a push connection corresponding to the token, where the push message includes the second profile identifier.

S440: Determine a processing manner of the push message based on whether the second profile identifier is the same as the first profile identifier.

The push message may be a notification bar message. The notification bar message is a push message that can be displayed without being processed by the app. Even if a process of the app does not exist, the terminal device may display some notification bar messages for which a profile identifier does not need to be verified. Therefore, using the notification bar message to push information to the user helps increase a push success probability.

After receiving the push message including the second profile identifier, the terminal device may verify the second profile identifier by using the push system terminal unit, and if the second profile identifier is the same as the first profile identifier, may display the push message; or if the second profile identifier is different from the first profile identifier, may not display the push message. Optionally, for an app, for example, a financial app, that has a relatively high security requirement, when the terminal device determines not to display the push message, the terminal device may delete the push message, to improve security of user data.

The first profile identifier is locally stored information generated by the terminal device. Therefore, when verifying the second profile identifier, the terminal device neither needs to interact with the server by using a network, nor needs to consider whether a process of the app exists, and therefore can determine the processing manner of the push message in a timely manner, thereby avoiding disclosure of privacy information and improving real-time performance of the push message.

Based on different properties of the first profile identifier, the first profile identifier may be a unique profile identifier locally stored by the app, or may be one of a plurality of profile identifiers locally stored by the app. If the first profile identifier is a unique profile identifier locally stored by the app, the push system terminal unit may determine the processing manner of the push message only based on whether the second profile identifier is the same as the first profile identifier, or may determine the processing manner of the push message based on whether the second profile identifier is the same as the first profile identifier and a state of the first profile identifier. If the first profile identifier is one of a plurality of profile identifiers locally stored by the app, the push system terminal unit needs to determine the processing manner of the push message based on whether the second profile identifier is the same as the first profile identifier and a state of the first profile identifier, to prevent the push message from being disclosed due to account switching of the app in a process of sending the push message.

For example, when a user performs an operation on the app in an interface of the app to log in to a new account, it indicates that the user does not want to receive a push message corresponding to an old account in the app. In this case, regardless of whether the old account is a private account of the app or a public account of a plurality of apps, the terminal device may delete a profile identifier corresponding to the old account, and generate a profile identifier corresponding to the new account, to meet a user requirement. In this way, the terminal device always locally retains a profile identifier (for example, the first profile identifier). When the second profile identifier is the same as the first profile identifier, the terminal device displays the push message; or when the second profile identifier is different from the first profile identifier, the terminal device determines not to display the push message.

In the foregoing case, the terminal device may determine the processing manner of the push message based on whether the profile identifier in the push message is the same as the local profile identifier, and does not need to perform other processing (for example, determines that the first profile identifier is in a valid state or an invalid state), thereby simplifying complexity of verifying the push message.

For another example, a process of the app may be deleted by an operating system. In this case, a user does not express an intention of logging out of the account of the app, the user may just not perform an operation on the app for a long time, and the intention of the user may not be met if the terminal device directly deletes the first profile identifier. Therefore, the terminal device may not delete the first profile identifier, but set the state of the first profile identifier to an invalid state. If the second profile identifier in the push message is the same as the first profile identifier, and the first profile identifier is in the invalid state, for security, the terminal device may not display the push message, temporarily retain the push message, and display the push message after the first profile identifier changes from the invalid state to a valid state. When the user starts the app again, the terminal device may set the state of the first profile identifier to the valid state, so as to receive a subsequent push message. In comparison with a solution in which the first profile identifier is directly deleted, in this embodiment, when the user starts the app again, a complex profile identifier generation process does not need to be performed, and a capability of receiving the push message by the app can be quickly restored, thereby improving real-time performance of obtaining the push message by the user.

In some scenarios, the logged-in account of the app is not a private account of the app, but is a public account. The public account is, for example, a terminal manufacturer account. One terminal manufacturer account may have an association relationship with a plurality of profile identifiers. When the terminal manufacturer account is in the logged-in state, it indicates that the user is still using the terminal device. In this case, the terminal device may set states of all profile identifiers (including the first profile identifier) associated with the terminal manufacturer account to the valid state. When the terminal manufacturer account is in the non-logged-in state, it indicates that the user does not use the terminal device. In this case, the terminal device may set states of all profile identifiers (including the first profile identifier) associated with the terminal manufacturer account to the invalid state. In this way, when the user logs in to the terminal manufacturer account again, a complex profile identifier generation process does not need to be performed, and a capability of receiving the push message by the app can be quickly restored, thereby improving real-time performance of obtaining the push message by the user.

A manner in which the terminal device processes the push message in different scenarios is described below in detail by using an example in which the account identifier is a public account identifier.

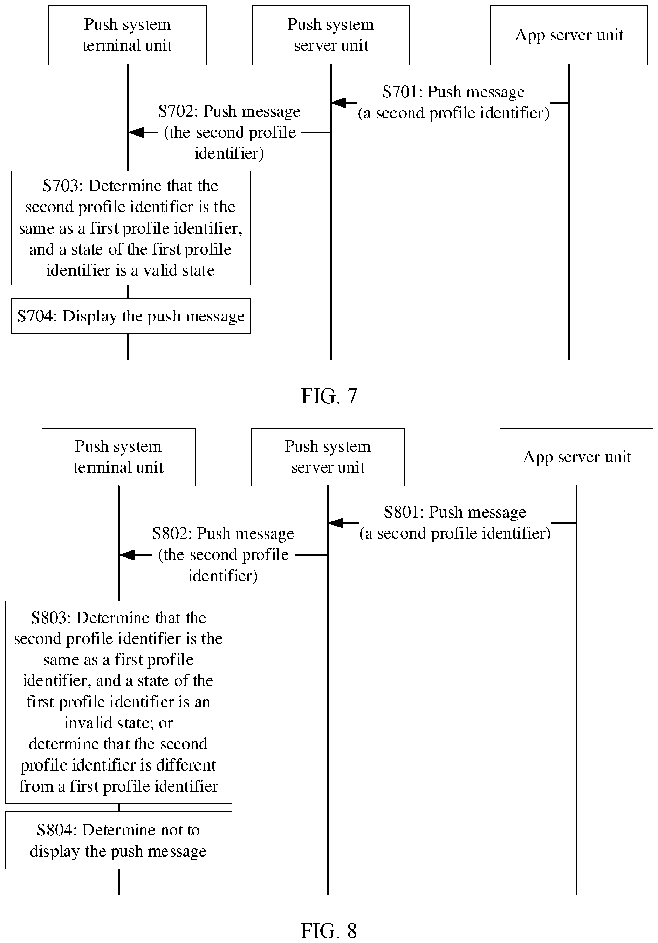

When the verification on the public account identifier in the push message succeeds, the terminal device may display the push message. FIG. 7 is a schematic diagram of a method for displaying a push message according to this application.

S701: An app server unit sends a push message to a push system server unit, where the push message carries a second profile identifier and a token.

S702: The push system server unit determines, based on the token, a push connection for transmitting the push message, and sends the push message to a push system terminal unit by using the push connection.

S703: After receiving the push message, the push system terminal unit parses the push message to obtain the second profile identifier, and if the second profile identifier is the same as a first profile identifier, and a state of the first profile identifier is a valid state, determines that verification on the second profile identifier succeeds, and may perform the following step.

S704: Display the push message. The push system terminal unit may display the push message at any position on a screen of the terminal device.

When the verification on the public account identifier in the push message fails, the terminal device may determine not to display the push message. FIG. 8 is a schematic diagram of a method for skipping displaying a push message according to this application.

S801: An app server unit sends a push message to a push system server unit, where the push message carries a second profile identifier and a token.

S802: The push system server unit determines, based on the token, a push connection for transmitting the push message, and sends the push message to a push system terminal unit by using the push connection.

S803: After receiving the push message, the push system terminal unit parses the push message to obtain the second profile identifier. If the second profile identifier is the same as a first profile identifier, and a state of the first profile identifier is an invalid state, or if the second profile identifier is different from a first profile identifier, the push system terminal unit determines that verification on the second profile identifier fails, and may perform the following step.

S804: Determine to display the push message. The push system terminal unit may delete the push message, to ensure that privacy content in the push message is not disclosed.

The verification on the second profile identifier may fail due to a case in which the first profile identifier is deleted or is set to the invalid state because a user actively logs out of an account of the app. Two scenarios due to which the verification on the second profile identifier fails are described below.

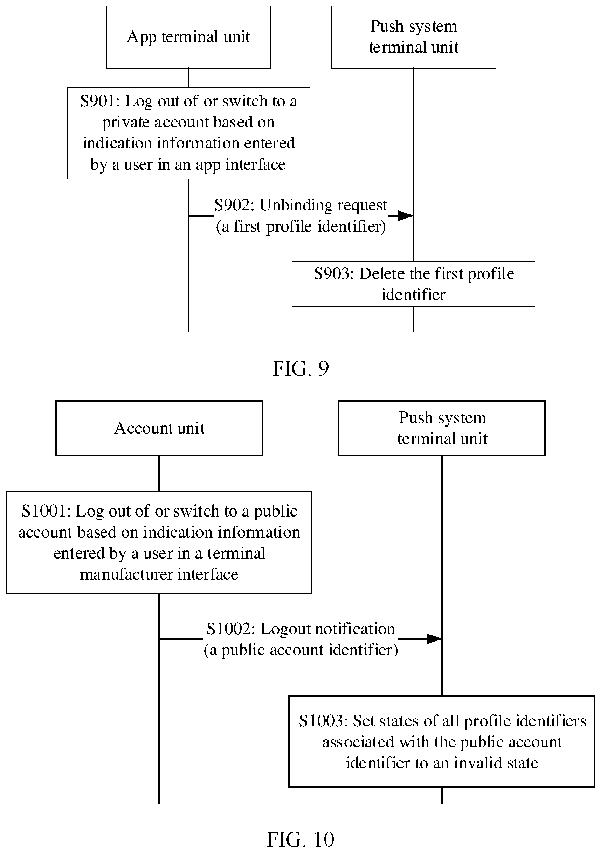

FIG. 9 is a schematic diagram of a method for deleting a first profile identifier according to this application.

S901: A user performs, in an app interface, an operation of logging out of or switching to a private account, and an app terminal unit logs out of or switches to the private account based on indication information generated based on the operation.

S902: The app terminal unit may send, to a push system terminal unit, an unbinding request that carries the first profile identifier, to request the push system terminal unit to unbind the first profile identifier from other information.

S903: The push system terminal unit deletes the first profile identifier based on the unbinding request. The push system terminal unit may not delete a token corresponding to the first profile identifier. In this way, the app terminal unit can further receive a push message for which a profile identifier does not need to be verified, for example, an advertisement message.

For example, each push message may include an indication field. If a value of the indication field is 0, it indicates that a profile identifier needs to be verified for the push message, and the push system terminal unit does not verify a profile identifier in the push message, and directly displays the push message. If a value of the indication field is not 0, the push system terminal unit needs to verify a profile identifier in the push message, and displays the push message after the verification on the profile identifier succeeds.

FIG. 10 is a schematic diagram of a method for setting a state of a first profile identifier to an invalid state according to this application.

S1001: A user performs, in a terminal manufacturer interface, an operation of logging out of or switching to a public account, and an account unit logs out of or switches to the public account based on indication information generated based on the operation.

S1002: The account unit may send, to a push system terminal unit, a logout notification that carries a public account identifier, to notify the push system terminal unit that the public account has been logged out.

S1003: The push system terminal unit sets, based on the logout notification, states of all profile identifiers (including the first profile identifier) associated with the public account to an invalid state. The push system terminal unit may not delete a token corresponding to the first profile identifier. In this way, the app unit can further receive a push message for which a profile identifier does not need to be verified, for example, an advertisement message.

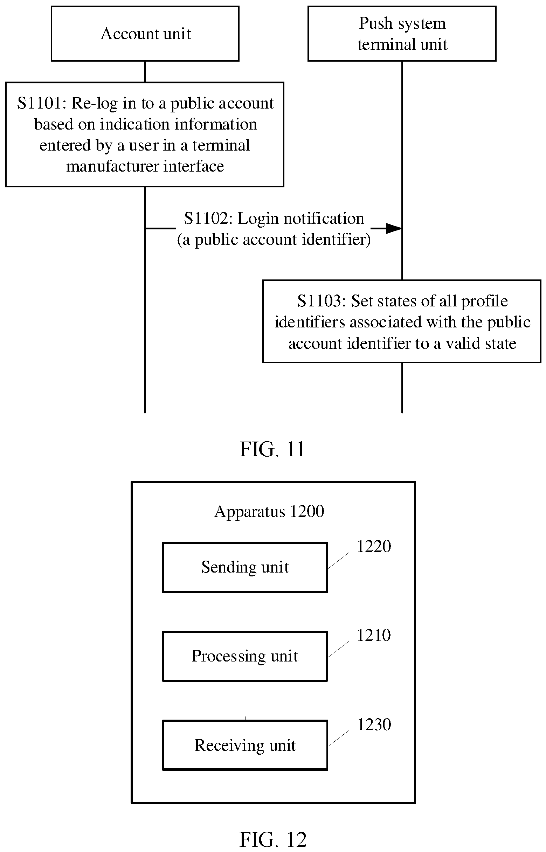

If the user logs in to the public account again after logging out of the public account, the terminal device may set the state of the first profile identifier to a valid state according to a method shown in FIG. 11.

S1101: The user performs, in the terminal manufacturer interface, an operation of re-logging in to the public account, and the account unit re-logs in to the public account based on indication information generated based on the operation.

S1102: The account unit may send, to the push system terminal unit, a login notification that carries the public account identifier, to notify the push system terminal unit that the public account has been logged in.

S1103: The push system terminal unit sets, based on the logout notification, the states of all the profile identifiers (including the first profile identifier) associated with the public account to a valid state.

It may be learned from the foregoing description that the terminal device does not need to perform a complex profile identifier generation process, and a capability of receiving the push message by the app can be quickly restored, thereby improving real-time performance of obtaining the push message by the user.

An example of the method for processing a push message provided in this application is described above in detail. It may be understood that to implement the foregoing functions, the corresponding apparatus includes corresponding hardware structures and/or software modules for performing the functions. It should be readily appreciated by a person skilled in the art that the example units, algorithms, and steps described with reference to the embodiments disclosed in this specification can be implemented in this application by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In this application, the apparatus for processing a push message may be divided into functional units based on the foregoing method examples. For example, each functional unit may be obtained through division based on a corresponding function, or two or more functions may be integrated into one unit. The integrated unit may be implemented in a form of hardware, or may be implemented in a form of a software functional unit. It needs to be noted that in this application, division into the units is an example, and is merely logical function division. During actual implementation, another division manner may be used.

FIG. 12 is a schematic diagram of a structure of an apparatus for processing a push message according to this application. The apparatus 1200 includes a processing unit 1210, a sending unit 1220, and a receiving unit 1230. The sending unit 1220 can perform a sending step under control of the processing unit 1210, and the receiving unit 1230 can perform a receiving step under control of the processing unit 1210.

The processing unit 1210 is configured to generate a first profile identifier based on an account identifier of a currently logged-in account of an app.

The sending unit 1220 is configured to send the first profile identifier and a token in a push system to a server of the app.

The receiving unit 1230 is configured to receive a push message from the server by using a push connection corresponding to the token. The push message includes a second profile identifier.

The processing unit 1210 is further configured to determine a processing manner of the push message based on whether the second profile identifier is the same as the first profile identifier.

Optionally, the processing unit 1210 is specifically configured to: when the second profile identifier is the same as the first profile identifier, display the push message; or when the second profile identifier is different from the first profile identifier, determine not to display the push message.

Optionally, the processing unit 1210 is specifically configured to: when the second profile identifier is the same as the first profile identifier, and a state of the first profile identifier is a valid state, display the push message; or when the second profile identifier is the same as the first profile identifier, and a state of the first profile identifier is an invalid state, determine not to display the push message.

Optionally, the account identifier is a terminal manufacturer account identifier; and when an account corresponding to the terminal manufacturer account identifier is in a logged-in state, the state of the first profile identifier is the valid state; or when an account corresponding to the terminal manufacturer account identifier is in a non-logged-in state, the state of the first profile identifier is the invalid state.

Optionally, when it is determined not to display the push message, the method further includes: deleting the push message.

Optionally, the first profile identifier is information generated after the account identifier is processed by using a hash algorithm, and the push message does not include the account identifier.

Optionally, the push message is a notification bar message.

For a specific manner in which the apparatus 1200 performs the method for processing a push message and generated beneficial effects, refer to the related description in the method embodiments.

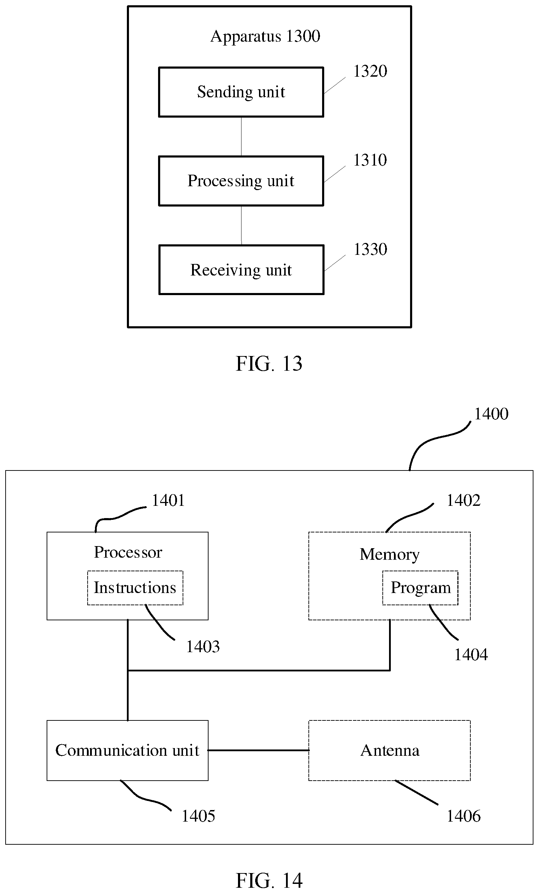

FIG. 13 is a schematic diagram of a structure of another apparatus for processing a push message according to this application. The apparatus 1300 includes a processing unit 1310, a sending unit 1320, and a receiving unit 1330. The sending unit 1320 can perform a sending step under control of the processing unit 1310, and the receiving unit 1330 can perform a receiving step under control of the processing unit 1310.

The receiving unit 1330 is configured to receive a first profile identifier, a token in a push system, and an account identifier of an app from a terminal device.

The sending unit 1320 is configured to send a push message to the terminal device based on the first profile identifier, the token, and the account identifier. The push message includes a second profile identifier, the second profile identifier is the same as the first profile identifier, and the second profile identifier is to be used by the terminal device to determine a processing manner of the push message.

Optionally, the first profile identifier is information generated after the account identifier is processed by using a hash algorithm, and the push message does not include the account identifier.

Optionally, the push message is a notification bar message.

For a specific manner in which the apparatus 1300 performs the method for processing a push message and generated beneficial effects, refer to the related description in the method embodiments.

FIG. 14 is a schematic diagram of a structure of an electronic device according to this application. A dashed line in FIG. 14 indicates that the unit or the module is optional. The device 1400 may be configured to implement the method described in the foregoing method embodiments. The device 1400 may be a terminal device, a server, or a chip.

The device 1400 includes one or more processors 1401. The one or more processors 1401 may support the device 1400 in implementing the method in the method embodiments. The processor 1401 may be a general-purpose processor or a dedicated processor. For example, the processor 1401 may be a central processing unit (central processing unit, CPU). The CPU may be configured to: control the device 1400, execute a software program, and process data of the software program. The device 1400 may further include a communication unit 1405, configured to implement signal input (receiving) and output (sending).

For example, the device 1400 may be a chip, and the communication unit 1405 may be an input and/or output circuit in the chip, or the communication unit 1405 may be a communication interface in the chip, and the chip may be used as a component in a terminal device, a network device, or another electronic device.

For another example, the device 1400 may be a terminal device or a server, and the communication unit 1405 may be a transceiver in the terminal device or the server, or the communication unit 1405 may be a transceiver circuit in the terminal device or the server.

The device 1400 may include one or more memories 1402. The memory 1402 stores a program 1404. The program 1404 may be run by the processor 1401 to generate instructions 1403, to enable the processor 1401 to perform, based on the instructions 1403, the method described in the foregoing method embodiments. Optionally, the memory 1402 may further store data. Optionally, the processor 1401 may further read the data stored in the memory 1402. The data and the program 1404 may be stored at a same storage address, or the data and the program 1404 may be stored at different storage addresses.

The processor 1401 and the memory 1402 may be disposed separately, or may be integrated together, for example, integrated into a system-on-chip (system on chip, SOC) in the terminal device.

The device 1400 may further include an antenna 1406. The communication unit 1405 is configured to implement a receiving and sending function of the device 1400 through the antenna 1406.

It should be understood that the steps in the foregoing method embodiments may be completed by using a logic circuit in a form of hardware or instructions in a form of software in the processor 1401. The processor 1401 may be a CPU, a digital signal processor (digital signal processor, DSP), an application-specific integrated circuit (application-specific integrated circuit, ASIC), a field programmable gate array (field programmable gate array, FPGA), or another programmable logic device, for example, a discrete gate, a transistor logic device, or a discrete hardware component.

This application further provides a computer program product. When the computer program product is executed by the processor 1401, the method according to any one of the method embodiments of this application is implemented.

The computer program product may be stored in the memory 1402, for example, is the program 1404. After processing processes such as preprocessing, compilation, assembly, and linking, the program 1404 is finally converted into an executable target file that can be executed by the processor 1401.

This application further provides a computer-readable storage medium. The computer-readable storage medium stores a computer program. When the computer program is executed by a computer, the method according to any one of the method embodiments of this application is implemented. The computer program may be a high-level language program, or may be an executable target program.

The computer-readable storage medium is, for example, the memory 1402. The memory 1402 may be a volatile memory or a nonvolatile memory, or the memory 1402 may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Based on description used as an example instead of a limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It may be clearly understood by a person skilled in the art that for ease and brevity of description, for a detailed working process and generated technical effects of the apparatus and the device described above, refer to the corresponding process and technical effects in the foregoing method embodiments. Details are not described herein.

In the several embodiments provided in this application, the disclosed system, apparatus, and method may be implemented in other manners. For example, some features of the method embodiments described above may be ignored or not performed. The described apparatus embodiments are merely examples. Division into the units is merely logical function division and may be other division in actual implementation. A plurality of units or components may be combined or integrated into another system. In addition, coupling between the units or coupling between the components may be direct coupling or indirect coupling, and the coupling may include an electrical connection, a mechanical connection, or another form of connection.

It should be understood that in various embodiments of this application, sequence numbers of the processes do not mean execution sequences. The execution sequences of the processes should be determined based on functions and internal logic of the processes, and should not be construed as any limitation on the implementation processes of embodiments of this application.

In addition, the terms "system" and "network" in this specification may be used interchangeably in this specification. The term "and/or" in this specification is merely an association relationship for describing associated objects, and represents that three relationships may exist. For example, A and/or B may represent the following three cases: Only A exists, both A and B exist, and only B exists. In addition, the character "/" in this specification usually indicates an "or" relationship between associated objects.

In conclusion, the foregoing descriptions are merely example embodiments of the technical solutions of this application, and are not intended to limit the protection scope of this application.

## Claims

1. A method (400) for processing a push message, comprising:
generating (S410) a first profile identifier based on an account identifier of a currently logged-in account of an app;
sending the first profile identifier, a token, and the account identifier of the app in a push system to a server of the app;
receiving a push message from the server by using a push connection corresponding to the token, wherein the push message comprises a second profile identifier; and
determining (S440) a processing manner of the push message based on whether the second profile identifier is the same as the first profile identifier,
wherein the determining a processing manner of the push message based on whether the second profile identifier is the same as the first profile identifier comprises:
when the second profile identifier is the same as the first profile identifier, displaying the push message; or
when the second profile identifier is different from the first profile identifier, determining not to display the push message, wherein, when verifying the second profile identifier, there is no need to interact with the server by using a network, nor there is a need to consider whether a process of the app exists.

2. The method according to claim 1, wherein the determining a processing manner of the push message based on whether the second profile identifier is the same as the first profile identifier comprises:
when the second profile identifier is the same as the first profile identifier, and a state of the first profile identifier is a valid state, displaying the push message; or
when the second profile identifier is the same as the first profile identifier, and a state of the first profile identifier is an invalid state, determining not to display the push message.

3. The method according to claim 2, wherein the account identifier is a terminal manufacturer account identifier; and
when an account corresponding to the terminal manufacturer account identifier is in a logged-in state, the state of the first profile identifier is the valid state; or
when an account corresponding to the terminal manufacturer account identifier is in a non-logged-in state, the state of the first profile identifier is the invalid state.

4. The method according to any one of claims 1 to 3, wherein when it is determined not to display the push message, the method further comprises:
deleting the push message.

5. The method according to any one of claims 1 to 4, wherein the first profile identifier is information generated after the account identifier is processed by using a hash algorithm, and the push message does not comprise the account identifier.

6. The method according to any one of claims 1 to 5, wherein the push message is a notification bar message.

7. A method for processing a push message, comprising:
receiving a first profile identifier, a token in a push system, and an account identifier of an app from a terminal device; and
sending a push message to the terminal device based on the first profile identifier, the token, and the account identifier, wherein the push message comprises a second profile identifier, and the second profile identifier is to be used by the terminal device to determine a processing manner of the push message,
wherein the determining a processing manner of the push message comprises:
when the second profile identifier is the same as the first profile identifier, displaying the push message; or
when the second profile identifier is different from the first profile identifier, determining not to display the push message, wherein, when verifying the second profile identifier, there is no need to interact with the server by using a network, nor there is a need to consider whether a process of the app exists.

8. The method according to claim 7, wherein the first profile identifier is information generated after the account identifier is processed by using a hash algorithm, and the push message does not comprise the account identifier.

9. The method according to claim 7 or 8, wherein the push message is a notification bar message.

10. An apparatus (1400) for processing a push message, comprising a processor (1401) and a memory (1402), wherein the processor (1401) is coupled to the memory (1402), the memory (1402) is configured to store a computer program, and when the computer program is executed by the processor (1401), the apparatus (1400) is enabled to perform the method according to any one of claims 1 to 6.

11. An apparatus (1400) for processing a push message, comprising a processor (1401) and a memory (1402), wherein the processor (1401) is coupled to the memory (1402), the memory (1402) is configured to store a computer program, and when the computer program is executed by the processor (1401), the apparatus is enabled to perform the method according to any one of claims 7 to 9.

12. A computer-readable storage medium, wherein the computer-readable storage medium stores a computer program, and when the computer program is executed by a processor, the processor is enabled to perform the method according to any one of claims 1 to 6.

13. A computer-readable storage medium, wherein the computer-readable storage medium stores a computer program, and when the computer program is executed by a processor, the processor is enabled to perform the method according to any one of claims 7 to 9.

## Patentansprüche

1. Verfahren (400) zur Verarbeitung einer "Push"-Nachricht, umfassend:
Generieren (S410) einer ersten Profilkennung basierend auf einer Kontokennung eines gegenwärtig angemeldeten Kontos einer App;
Senden der ersten Profilkennung, eines Tokens und der Kontokennung der App in einem "Push"-System an einen Server der App;
Empfangen einer "Push"-Nachricht vom Server durch Verwenden einer "Push"-Verbindung, die dem Token entspricht, wobei die "Push"-Nachricht eine zweite Profilkennung umfasst; und
Bestimmen (S440) einer Verarbeitungsart der "Push"-Nachricht basierend darauf, ob die zweite Profilkennung gleich wie die erste Profilkennung ist,
wobei das Bestimmen einer Verarbeitungsart der "Push"-Nachricht basierend darauf, ob die zweite Profilkennung gleich wie die erste Profilkennung ist, Folgendes umfasst:
wenn die zweite Profilkennung gleich wie die erste Profilkennung ist, Anzeigen der "Push"-Nachricht; oder
wenn die zweite Profilkennung verschieden von der ersten Profilkennung ist, Bestimmen, die "Push"-Nachricht nicht anzuzeigen, wobei beim Verifizieren der zweiten Profilkennung weder eine Notwendigkeit besteht, mit dem Server durch Verwenden eines Netzwerks zu interagieren, noch eine Notwendigkeit besteht, zu berücksichtigen, ob ein Prozess der App existiert.

2. Verfahren nach Anspruch 1, wobei das Bestimmen einer Verarbeitungsart der "Push"-Nachricht basierend darauf, ob die zweite Profilkennung gleich wie die erste Profilkennung ist, Folgendes umfasst:
wenn die zweite Profilkennung gleich wie die erste Profilkennung ist und ein Zustand der ersten Profilkennung ein gültiger Zustand ist, Anzeigen der "Push"-Nachricht; oder
wenn die zweite Profilkennung gleich wie die erste Profilkennung ist und ein Zustand der ersten Profilkennung ein ungültiger Zustand ist, Bestimmen, die "Push"-Nachricht nicht anzuzeigen.

3. Verfahren nach Anspruch 2, wobei die Kontokennung eine Kontokennung eines Endgeräteherstellers ist; und,
wenn ein Konto, das der Kontokennung des Endgeräteherstellers entspricht, in einem angemeldeten Zustand ist, der Zustand der ersten Profilkennung der gültige Zustand ist; oder
wenn ein Konto, das der Kontokennung des Endgeräteherstellers entspricht, in einem nicht angemeldeten Zustand ist, der Zustand der ersten Profilkennung der ungültige Zustand ist.

4. Verfahren nach einem der Ansprüche 1 bis 3, wobei das Verfahren, wenn bestimmt wird, die "Push"-Nachricht nicht anzuzeigen, ferner Folgendes umfasst:
Löschen der "Push"-Nachricht.

5. Verfahren nach einem der Ansprüche 1 bis 4, wobei es sich bei der ersten Profilkennung um Informationen handelt, die nach dem Verarbeiten der Kontokennung durch Verwenden eines "Hash"-Algorithmus generiert werden, und die "Push"-Nachricht die Kontokennung nicht umfasst.

6. Verfahren nach einem der Ansprüche 1 bis 5, wobei die "Push"-Nachricht eine Benachrichtigungsleistennachricht ist.

7. Verfahren zur Verarbeitung einer "Push"-Nachricht, umfassend:
Empfangen einer ersten Profilkennung, eines Tokens in einem "Push"-System und einer Kontokennung einer App von einer Endgerätevorrichtung; und
Senden einer "Push"-Nachricht an die Endgerätevorrichtung basierend auf der ersten Profilkennung, dem Token und der Kontokennung, wobei die "Push"-Nachricht eine zweite Profilkennung umfasst,
und die zweite Profilkennung durch die Endgerätevorrichtung verwendet werden soll, um eine Verarbeitungsart der "Push"-Nachricht zu bestimmen,
wobei das Bestimmen einer Verarbeitungsart der "Push"-Nachricht Folgendes umfasst:
wenn die zweite Profilkennung gleich wie die erste Profilkennung ist, Anzeigen der "Push"-Nachricht; oder
wenn die zweite Profilkennung verschieden von der ersten Profilkennung ist, Bestimmen, die "Push"-Nachricht nicht anzuzeigen, wobei beim Verifizieren der zweiten Profilkennung weder eine Notwendigkeit besteht, mit dem Server durch Verwenden eines Netzwerks zu interagieren, noch eine Notwendigkeit besteht, zu berücksichtigen, ob ein Prozess der App existiert.

8. Verfahren nach Anspruch 7, wobei es sich bei der ersten Profilkennung um Informationen handelt, die nach dem Verarbeiten der Kontokennung durch Verwenden eines "Hash"-Algorithmus generiert werden, und die "Push"-Nachricht die Kontokennung nicht umfasst.

9. Verfahren nach einem der Ansprüche 7 oder 8, wobei die Push-Nachricht eine Benachrichtigungsleistennachricht ist.

10. Vorrichtung (1400) zum Verarbeiten einer "Push"-Nachricht, umfassend einen Prozessor (1401) und einen Speicher (1402), wobei der Prozessor (1401) mit dem Speicher (1402) gekoppelt ist, der Speicher (1402) zum Speichern eines Computerprogramms ausgelegt ist und, wenn das Computerprogramm vom Prozessor (1401) ausgeführt wird, die Vorrichtung (1400) zum Durchführen des Verfahrens nach einem der Ansprüche 1 bis 6 in der Lage ist.

11. Vorrichtung (1400) zum Verarbeiten einer "Push"-Nachricht, umfassend einen Prozessor (1401) und einen Speicher (1402), wobei der Prozessor (1401) mit dem Speicher (1402) gekoppelt ist, der Speicher (1402) zum Speichern eines Computerprogramms ausgelegt ist und, wenn das Computerprogramm vom Prozessor (1401) ausgeführt wird, die Vorrichtung zum Durchführen des Verfahrens nach einem der Ansprüche 7 bis 9 in der Lage ist.

12. Computerlesbares Speichermedium, wobei das computerlesbare Speichermedium ein Computerprogramm speichert und ein Prozessor bei Ausführung des Computerprogramms durch den Prozessor zum Durchführen des Verfahrens nach einem der Ansprüche 1 bis 6 in der Lage ist.

13. Computerlesbares Speichermedium, wobei das computerlesbare Speichermedium ein Computerprogramm speichert und ein Prozessor bei Ausführung des Computerprogramms durch den Prozessor zum Durchführen des Verfahrens nach einem der Ansprüche 7 bis 9 in der Lage ist.

## Revendications

1. Procédé (400) de traitement d'un message de poussée, comprenant :
la génération (S410) d'un premier identifiant de profil sur la base d'un identifiant de compte d'un compte actuellement connecté d'une application ;
l'envoi du premier identifiant de profil, d'un jeton et de l'identifiant de compte de l'application dans un système de poussée à un serveur de l'application ;
la réception d'un message de poussée du serveur en utilisant une connexion de poussée correspondant au jeton, le message de poussée comprenant un second identifiant de profil ; et
la détermination (S440) d'un mode de traitement du message de poussée sur la base du fait que le second identifiant de profil est ou non le même que le premier identifiant de profil,
la détermination d'un mode de traitement du message de poussée sur la base du fait que le second identifiant de profil est ou non le même que le premier identifiant de profil comprenant :
lorsque le second identifiant de profil est le même que le premier identifiant de profil, l'affichage du message de poussée ; ou
lorsque le second identifiant de profil est différent du premier identifiant de profil, la détermination de ne pas afficher le message de poussée, dans lequel, lors de la vérification du second identifiant de profil, il n'est pas nécessaire d'interagir avec le serveur en utilisant un réseau, ni d'examiner s'il existe un processus de l'application.

2. Procédé selon la revendication 1, la détermination d'un mode de traitement du message de poussée sur la base du fait que le second identifiant de profil est le même ou non que le premier identifiant de profil comprenant :
lorsque le second identifiant de profil est le même que le premier identifiant de profil et qu'un état du premier identifiant de profil est un état valide, l'affichage du message de poussée ; ou
lorsque le second identifiant de profil est le même que le premier identifiant de profil et qu'un état du premier identifiant de profil est un état non valide, la détermination de ne pas afficher le message de poussée.

3. Procédé selon la revendication 2, l'identifiant de compte étant un identifiant de compte de fabricant de terminal ; et
lorsque qu'un compte correspondant à l'identifiant de compte de fabricant de terminal est dans un état connecté, l'état du premier identifiant de profil étant l'état valide ; ou
lorsque qu'un compte correspondant à l'identifiant de compte de fabricant de terminal est dans un état non connecté, l'état du premier identifiant de profil étant l'état non valide.

4. Procédé selon l'une quelconque des revendications 1 à 3, lorsqu'il est déterminé de ne pas afficher le message de poussée, le procédé comprenant en outre :
la suppression du message de poussée.

5. Procédé selon l'une quelconque des revendications 1 à 4, le premier identifiant de profil étant des informations générées après le traitement de l'identifiant de compte à l'aide d'un algorithme de hachage, et le message de poussée ne comprenant pas l'identifiant de compte.

6. Procédé selon l'une quelconque des revendications 1 à 5, le message de poussée étant un message de barre de notification.

7. Procédé de traitement d'un message de poussée, comprenant :
la réception d'un premier identifiant de profil, d'un jeton dans un système de poussée, et d'un identifiant de compte d'une application provenant d'un dispositif terminal ; et
l'envoi d'un message de poussée au dispositif terminal sur la base du premier identifiant de profil, du jeton et de l'identifiant de compte, le message de poussée comprenant un second identifiant de profil,
et le second identifiant de profil devant être utilisé par le dispositif terminal pour déterminer un mode de traitement du message de poussée,
la détermination d'un mode de traitement du message de poussée comprenant :
lorsque le second identifiant de profil est le même que le premier identifiant de profil, l'affichage du message de poussée ; ou
lorsque le second identifiant de profil est différent du premier identifiant de profil, la détermination de ne pas afficher le message de poussée, dans lequel, lors de la vérification du second identifiant de profil, il n'est pas nécessaire d'interagir avec le serveur en utilisant un réseau, ni d'examiner s'il existe un processus de l'application.

8. Procédé selon la revendication 7, le premier identifiant de profil étant des informations générées après le traitement de l'identifiant de compte à l'aide d'un algorithme de hachage, et le message de poussée ne comprenant pas l'identifiant de compte.

9. Procédé selon la revendication 7 ou 8, le message de poussée étant un message de barre de notification.

10. Appareil (1400) de traitement d'un message de poussée, comprenant un processeur (1401) et une mémoire (1402), le processeur (1401) étant couplé à la mémoire (1402), la mémoire (1402) étant configurée pour stocker un programme informatique, et lorsque le programme informatique est exécuté par le processeur (1401), l'appareil (1400) étant en mesure de réaliser le procédé selon l'une quelconque des revendications 1 à 6.

11. Appareil (1400) de traitement d'un message de poussée, comprenant un processeur (1401) et une mémoire (1402), le processeur (1401) étant couplé à la mémoire (1402), la mémoire (1402) étant configurée pour stocker un programme informatique, et lorsque le programme informatique est exécuté par le processeur (1401), l'appareil étant en mesure de réaliser le procédé selon l'une quelconque des revendications 7 à 9.

12. Support de stockage lisible par ordinateur, le support de stockage lisible par ordinateur stockant un programme informatique, et lorsque le programme informatique est exécuté par un processeur, le processeur étant en mesure de réaliser le procédé selon l'une quelconque des revendications 1 à 6.

13. Support de stockage lisible par ordinateur, le support de stockage lisible par ordinateur stockant un programme informatique, et lorsque le programme informatique est exécuté par un processeur, le processeur étant en mesure de réaliser le procédé selon l'une quelconque des revendications 7 à 9.
